# EUROPÄISCHE PATENTSCHRIFT

(11) **EP 0 581 029 B1**
(45) Veröffentlichungstag und Bekanntmachung des Hinweises auf die Patenterteilung: **12.09.2001**
(21) Anmeldenummer: 93110319.6
(22) Anmeldetag: 29.06.1993
(51) Int. Cl.: H04Q 11/04, H04Q 3/64

(54) **Verfahren zur Zuteilung der vermittlungstechnischen Ressourcen eines Kommunikationssystems für Wähl- und Festverbindungen**
Method for allocation of the switching ressources of a telecommunication system for dial-up and permanent connections
Procédé d'allocation des ressources de commutation d'un système de télécommunication pour des connexions à selection et permanentes

(30) Priorität: 28.07.1992 DE 4224932
(43) Veröffentlichungstag der Anmeldung: 02.02.1994
(73) Patentinhaber: SIEMENS AKTIENGESELLSCHAFT, 80333 München (DE)
(72) Erfinder: Stöckl, Werner, Dr.phil., D-8021 Baierbrunn (DE); Tietsch, Michael, Dipl.-Ing., D-8912 Kaufering (DE)

(56) Entgegenhaltungen:
- US-A- 4 455 455
- US-A- 4 805 166
- US-A- 4 910 766
- US-A- 5 065 392
- US-A- 5 065 393
- PROCEEDINGS OF THE 13TH INTERNATIONAL TELETRAFFIC CONGRESS, 19. Juni 1991, COPENHAGEN (DK) Seiten 639 - 645 KRÖNER ET AL 'Performance Comparison of Resource Sharing Strategies between Lost-call-cleared and Reservation Traffic'
- PROCEEDINGS OF THE 11TH INTERNATIONAL TELETRAFFIC CONGRESS, Bd.1, 4. September 1985, KYOTO (JP) Seiten 8 - 14 ROBERTS ET AL 'Traffic models for telecommunication services with advance capacity reservation'
- NTZ ARCHIV, Bd.10, Nr.2, Februar 1988, BERLIN (DE) Seiten 39 - 43 GERNOT VON DER STRATEN 'Verkehrsverhalten von Systemen mit Reservierungsbetrieb'
- IEEE GLOBAL TELECOMMUNICATIONS CONFERENCE & EXHIBITION - PAPER 46.1, Bd.3, 18. November 1988, HOLLYWOOD (US) Seiten 1525 - 1529, XP14525 R.K. BERMAN 'Customer control and management in a multi-controller environment'
- REVIEW OF THE ELECTRICAL COMMUNICATION LABORATORIES, Bd.33, Nr.4, 1985, TOKYO (JP) Seiten 581 - 589, XP308711 TOMITO ET AL 'Reservation-Based Communication Control System'

## Beschreibung

In Kommunikationssystemen stellen vermittlungstechnische Ressourcen diejenigen vermittlungstechnischen Betriebsmittel dar, die bei Wählverbindungen temporär und bei Festverbindungen gegebenenfalls über längere Zeiträume für das Vermitteln der Verbindungen von Kommunikationsendeinrichtungen vorgesehen sind. Vermittlungstechnische Ressourcen umfassen insbesondere die Zentral- und Teilkoppeleinrichtungen von Kommunikationssystemen bzw. Kommunikationsanlagen und in zunehmendem Maße die Übermittlungskapazitäten von Kommunikationsendgeräteanschlüssen von Kommunikationssystemen, insbesondere Breitbandkommunikationssystemen, wobei die Übermittlungskapazitäten oder Teilübermittlungskapazitäten an eine oder mehrere an einen Kommunikationsendgeräteanschluß anschließbare Kommunikationsendgeräte vermittelbar bzw. zuteilbar sind. Die Zuteilung bzw. Vermittlung der vermittlungstechnischen Ressourcen wird bei Wählverbindungen durch eine zwischen Kommunikationsendgeräten und Kommunikationssystem vorgesehene Signalisierungsprozedur und bei Festverbindungen entweder ebenfalls durch eine Signalisierungsprozedur zwischen Kommunikationsendgerät und Kommunikationssystem oder durch betriebstechnische Eingaben bzw. Einstellungen am Kommunikationssystem bewirkt. Im Gegensatz zu Wählverbindungen sind für Festverbindungen die vermittlungstechnischen Ressourcen nicht direkt im Anschluß an die Signalisierungsphase, sondern zu von den Teilnehmern vorgegebenen Terminen, d. h. vorgegebenem Tag, Stunde und Zeitdauer, bereitzustellen. Um die Verfügbarkeit der vermittlungstechnischen Ressourcen zu den vorgegebenen Terminen zu gewährleisten, werden die vermittlungstechnischen Ressourcen innerhalb einer vor dem vorgegebenen Termin liegenden Reservierungszeit reserviert. Die erforderliche Dauer der Reservierungszeit wird erheblich durch den Umfang der benötigten vermittlungstechnischen Ressourcen - d. h. durch den erforderlichen Umfang der Koppelfeldkapazität bzw. Übermittlungskapazität - bestimmt, wobei die erforderliche Koppelfeldkapazität bzw. Übermittlungskapazität üblicherweise in Datenmenge je Zeiteinheit - in einem diensteintegrierenden Digitalnetz (ISDN), beispielsweise 64 KBit/s oder 2 MBit/s - angegeben wird. Dies bedeutet bei steigendem Umfang der erforderlichen vermittlungstechnischen Ressourcen längere Reservierungszeiten, wobei bei hohem Bedarf an vermittlungstechnischen Ressourcen erhebliche Reservierungszeiten - z. B. im Stundenbereich - vorzusehen sind. Bei der Bestimmung der Reservierungszeiten ist zugleich eine maximale Verkehrsbelastung des Kommunikationssystems bzw. der Kommunikationsanlage zu berücksichtigen, da eine Verkehrsbelastung durch Wählverbindungen und des damit verbundenen Ressourcenbedarfs während einer vorgegebenen Reservierungszeit nicht vorhersehbar ist, und dadurch die Reservierungszeit zusätzlich verlängert wird. Während der Reservierungszeit werden bei großem Ressourcenbedarf verfügbare Teilressourcen - z. B. bei einem Bedarf von 2 MBit/s einzelne 64 KBit/s-Kapazitäten - reserviert bzw. gesammelt, bis der erforderliche Ressourcenumfang reserviert ist. Innerhalb dieser Reservierungszeiten bleiben die reservierten vermittlungstechnischen Ressourcen, insbesondere für Wählverbindungen, ungenutzt und reduzieren bei umfangreich zu reservierenden vermittlungstechnischen Ressourcen und bei mehreren gleichzeitig zu reservierenden Festverbindungen die Gesamtvermittlungskapazität bzw. Übermittlungskapazität eines Kommunikationssystems bzw. eines Kommunikationsendgeräteanschlusses erheblich.

Aus US 5,065,392 und US 5,065,393 sind zentrale Netzwerkcontroller bekannt, die Netzwerkressourcen in Abhängigkeit von benutzerseitigen Reservierungsanfragen an ein Kommunikationssystem vormerken und zugehörige Verbindungen einrichten. Die Reservierungsanfragen enthalten Angaben über den gewünschten Beginn und die gewünschte Dauer einer Verbindung.

Die der Erfindung zugrundeliegende Aufgabe besteht darin, die in einem Kommunikationssystem vor einem Vermitteln von terminierten Festverbindungen reservierten, nicht verfügbaren vermittlungstechnischen Ressourcen, auf ein Minimum zu beschränken. Die Aufgabe wird durch die Merkmale des Anspruchs 1 gelöst.

Der wesentliche Aspekt des erfindungsgemäßen Verfahrens ist darin zu sehen, daß in Kommunikationsendeinrichtungen, in denen eine Verbindungsdauer angebbar ist, eine Verbindungsdauerinformation gebildet, an das zugeordnete Kommunikationssystem übermittelt und dort nach dem Durchschalten der jeweiligen Wählverbindung deren Verbindungsendezeitpunkt und der damit verbundene Freiwerdezeitpunkt der zugeordneten vermittlungstechnischen Ressourcen ermittelbar ist. Des weiteren werden im Kommunikationssystem die vor dem Termin für die folgende terminierte Festverbindung nächstliegenden Verbindungsenden solange selektiert und die vermittlungstechnischen Ressourcen der zugehörigen Wählverbindungen ermittelt, bis die Summe der ermittelten vermittlungstechnischen Ressourcen dem Umfang der jeweils zu vermittelnden terminierten Festverbindung entspricht. Die vermittlungstechnischen Ressourcen der derart ausgewählten Wählverbindungen werden jeweils nach Ende der Wählverbindung für die jeweilige terminierte Festverbindung reserviert.

Der wesentliche Vorteil des erfindungsgemäßen Verfahrens ist darin zu sehen, daß mit einer einfachen Maßnahme - angebbare Verbindungsdauern an das Kommunikationssystem zu übermitteln - die vermittlungstechnischen Ressourcen eines Kommunikationssystem, die für eine terminierte Festverbindung vorgesehen sind, nicht bereits ab einem im wesentlichen auf den Umfang der vermittlungstechnischen Ressourcen der Festverbindung abgestimmten Reservierungszeitpunkt reserviert werden müssen, sondern für mit Verbindungsdauerangaben versehene Wählverbindungen bis kurz vor dem Termin der Festverbindung nutzbar sind. Hierdurch wird eine wesentliche Steigerung der Nutzung der vermittlungstechnischen Ressourcen in einem Kommunikationssystem erreicht. Als Wählverbindungen mit angebbaren Verbindungsdauern sind vorzugsweise Wählverbindungen für Datenübertragungen, z. B. Dateiübermittlungen, Formularübermittlungen, usw., geeignet.

In kleineren und mittleren Kommunikationssystemen bleibt gegebenenfalls die Summe der vermittlungstechnischen Ressourcen der selektierten, mit Verbindungsdauern versehenen Wählverbindungen unter dem Umfang der vermittlungstechnischen Ressourcen, der für die folgende terminierte Festverbindung erforderlich ist. Gemäß einer vorteilhaften Ausgestaltung des erfindungsgemäßen Verfahrens werden hierbei ab einem Reservierungszeitpunkt, der für die Reservierung von freiwerdenden vermittlungstechnischen Ressourcen von Wählverbindungen ohne angegebene Verbindungsdauern bestimmt ist, die Summe der vermittlungstechnischen Ressourcen der selektierbaren, mit Verbindungsdauern versehenen Wählverbindungen ermittelt und der zusätzlich erforderliche Umfang von vermittlungstechnischen Ressourcen durch freiwerdende vermittlungstechnische Ressourcen von Wählverbindungen ohne angegebene Verbindungsdauern reserviert - Anspruch 2. Durch diese vorteilhafte Maßnahme, d. h. Kombination des bisherigen Reservierungsverfahrens mit dem erfindungsgemäßen Verfahren - kann das erfindungsgemäße Verfahren in allen Kommunikationssystemen für die Reservierung von vermittlungstechnischen Ressourcen für terminierte Festverbindungen eingesetzt werden. Des weiteren ist der Reservierungszeitpunkt für die Reservierung von vermittlungstechnischen Ressourcen von Wählverbindungen mit oder ohne angegebenen Verbindungsdauern in Abhängigkeit von der Anzahl der Wählverbindungen mit angegebenen Verbindungsdauern und/oder der Summe der vermittlungstechnischen Ressourcen dieser Wählverbindungen bestimmbar - Anspruch 3. Hierbei wird die Anzahl der Wählverbindungen mit angegebenen Verbindungsdauern ständig festgestellt und entsprechend einer vorgegebenen Anzahl, die in Abhängigkeit von der terminierten Festverbindung mit dem größten Umfang der vermittlungstechnischen Resourcen bestimmt wird, der aktuelle Reservierungszeitpunkt bestimmt.

Des weiteren ist in den Patentansprüchen 4 und 6 bzw. 5 und 7 jeweils eine besonders vorteilhafte Variante, insbesondere im Hinblick auf eine programmtechnische Realisierung, angegeben. Der wesentliche Unterschied der beiden Varianten ist darin zu sehen, daß bei der ersten Variante die die Verbindungsdauer anzeigende Verbindungsdauerinformation sowie eine den Verbindungsbeginn anzeigende Verbindungsbeginninformation gespeichert wird und bei der zweiten Variante aus der zwischengespeicherten Verbindungsdauerinformation und dem ermittelten Verbindungsbeginn eine Verbindungsendeinformation gebildet und gespeichert wird. Der zusätzliche Aufwand des Ermittelns, Bildens und Speicherns einer Verbindungsendeinformation für jede Wählverbindung mit angegebener Verbindungsdauer erscheint dann vorteilhaft, wenn in Kommunikationssystemen häufig terminierte Festverbindungen zu vermitteln sind.

Gemäß einer weiteren vorteilhaften Weiterbildung des erfindungsgemäßen Verfahrens repräsentieren vermittlungstechnische Ressourcen die Vermittlungskapazität einer Kommunikationsanlage und/oder jeweils die Übermittlungskapazität eines Basisanschlusses eines breitbandigen, diensteintegrierenden Digitalnetzes - Anspruch 8. Der Basisanschluß eines breitbandigen, diensteintegrierenden Digitalnetzes weist beispielsweise eine vermittlungstechnische Ressource, d. h. eine Übermittlungskapazität von 150 oder 600 MBit/s auf. Die vermittlungstechnische Ressource ist beispielsweise in einzelne 2 MBit/s oder 64 KBit/s umfassende Teilressourcen unterteil- bzw. vermittelbar. Um beispielsweise im Sinne einer Videokonferenz eine terminierte Festverbindung mit einem Umfang der vermittlungstechnischen Ressourcen von 1 MBit/s zum angegebenen Termin bereitzustellen, sind einzelne 64 KBit/s umfassende vermittlungstechnische Teilressourcen mit Hilfe des erfindungsgemäßen Verfahrens reservierbar.

Besonders vorteilhaft werden die in den Kommunikationsendeinrichtungen gebildeten Verbindungsdauerinformationen in einem hierfür vorgesehenen Dauerinformationsfeld einer Verbindungsaufbaumeldung des breitbandigen, diensteintegrierenden Digitalnetzes an das Kommunikationssystem übermittelt - siehe Anspruch 9. Dieses Verbindungsdauerinformationsfeld ist beispielsweise für die in der Standardisierung befindliche Signalisierungsprozedur - Q.93B (B-ISDN Access Signalling) - für breitbandige, diensteintegrierende Digitalnetze vorsehbar.

Im folgenden wird das erfindungsgemäße Verfahren anhand dreier Zeitdiagramme und dreier Ablaufdiagramme erläutert.

Dabei zeigen
- FIG 1: anhand von drei Zeit-/Ressourcendiagrammen den Einfluß des erfindungsgemäßen Verfahrens auf die Reservierungszeitpunkte sowie auf die Reservierung der vermittlungstechnischen Ressourcen von terminierten Festverbindungen, und
- FIG 2 und 3: anhand dreier Ablaufdiagramme zwei Varianten einer programmtechnischen Realisierung des erfindungsgemäßen Verfahrens.

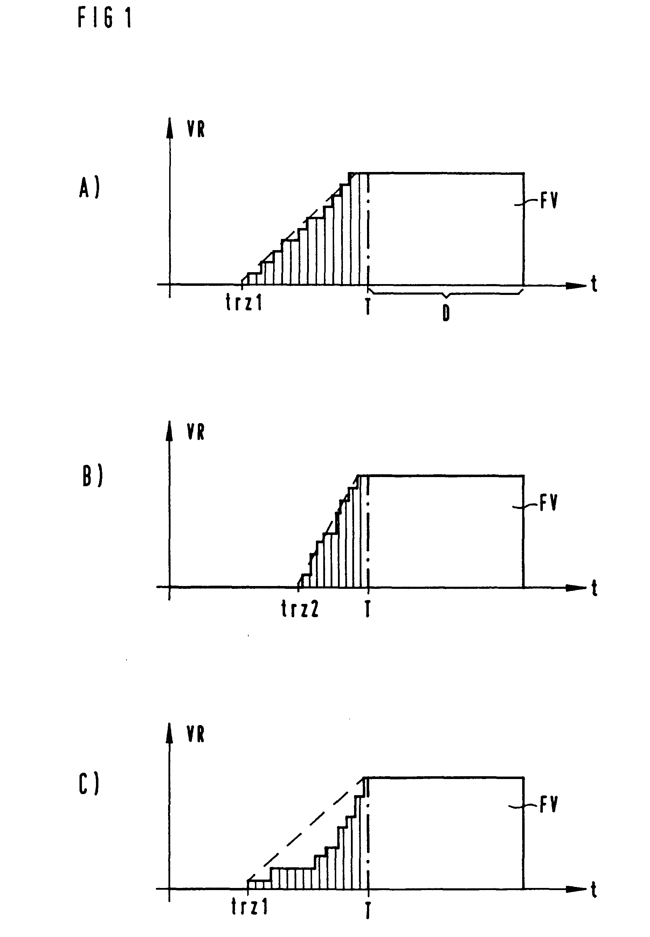

FIG 1A zeigt in einem Zeit-/Ressourcendiagramm ein Reservierungsverfahren für eine terminierte Festverbindung FV, wobei der Abszissenachse der zeitliche Verlauf t zugeordnet ist und durch die Ordinatenachse der Umfang der vermittlungstechnischen Ressourcen VR angezeigt wird. Diese Zuordnung sowie ein Termin T für eine terminierte Festverbindung FV und deren Dauer D ist in FIG 1A, B und C gleich dargestellt. Der Termin T für die Festverbindung FV ist beispielsweise durch eine betriebstechnische Eingabe an einer Bedieneinrichtung eines Kommunikationssystems bestimmt. Dieser Termin T ist alternativ durch eine frühzeitig vor diesem Termin T vorgesehene Signalisierung von einer an das Kommunikationssystem angeschlossenen Kommunikationsendeinrichtung einstellbar. Die vermittlungstechnischen Ressourcen VR stellen beispielsweise die Übermittlungskapazität eines Basisanschlusses eines breitbandigen, diensteintegrierenden Digitalnetzes - in der Fachwelt als B-ISDN bekannt - dar, wobei Übermittlungskapazitäten des Basisanschlusses von 150 MBit/s bzw. 600 MBit/s möglich sind. In FIG 1A ist des weiteren ein erster Reservierungszeitpunkt trz1 angegeben. Dieser Reservierungszeitpunkt trz1 wird im wesentlichen durch den Umfang der vermittlungstechnischen Ressourcen VR für die zu vermittelnde, terminierte Festverbindung FV beeinflußt, d. h. je größer der Umfang der erforderlichen vermittlungstechnischen Ressourcen VR für eine terminierte Festverbindung FV, um so frühzeitiger ist der Reservierungszeitpunkt für die terminierte Festverbindung FV zu wählen. Des weiteren ist für den Reservierungsablauf nach FIG 1A angenommen, daß nur freiwerdende vermittlungstechnische Ressourcen VR von Wählverbindungen W ohne Verbindungsdauerangabe für die folgende, terminierte Festverbindung FV reserviert werden. Durch den stufenförmigen Verlauf der Reservierungskurve wird das Freiwerden der vermittlungstechnischen Ressourcen VR von Wählverbindungen W ohne Verbindungsdauerangabe und werden die Reservierungszeitpunkte für die freiwerdenden vermittlungstechnischen Ressourcen angezeigt. Die senkrecht schraffierte Fläche zeigt die reservierten vermittlungstechnischen Ressourcen VR für die terminierte Festverbindung FV, die beispielsweise nicht mehr für Wählverbindungen verfügbar sind.

In FIG 1B ist der Reservierungsablauf für eine gleichartig terminierte Festverbindung FV unter Berücksichtigung des erfindungsgemäßen Verfahrens dargestellt. Hierbei wird vorausgesetzt, daß eine erhebliche Anzahl von Wählverbindungen mit Verbindungsdauerangaben durch das Kommunikationssystem vermittelt werden. Basierend auf dieser Voraussetzung ist ein zweiter Reservierungszeitpunkt trz2 bestimmbar, wobei dieser zweite Reservierungszeitpunkt trz2 erheblich näher vor dem Termin T für die folgende terminierte Festverbindung FV liegt. Dies bedeutet, daß eine Steuereinrichtung des Kommunikationssystems durch die Reservierungsprozedur erheblich später und weit geringer belastet wird. Des weiteren zeigt die in FIG 1B dargestellte senkrecht schraffierte Fläche die vermittlungstechnischen Ressourcen VR, die vor dem Termin T der terminierten Festverbindung FV zu reservieren sind. Der Vergleich der beiden senkrecht schraffierten Flächen in FIG 1A und FIG 1B verdeutlicht, daß durch das erfindungsgemäße Verfahren wesentlich später und eine kürzere Zeitdauer vermittlungstechnische Ressourcen für eine folgende terminierte Festverbindung FV reserviert werden müssen. Diese weiterhin für Wählverbindungen W mit angegebenen Verbindungsdauern benutzbaren vermittlungstechnischen Ressourcen VR steigern die Leistungsfähigkeit beispielsweise eines Basisanschlusses eines breitbandigen, diensteintegrierenden Digitalnetzes erheblich.

In FIG 1C ist der Reservierungsablauf für eine gemäß FIG 1A bzw. 1B terminierte Festverbindung FV dargestellt, wobei hier vorausgesetzt ist, daß üblicherweise die Summe der freiwerdenden vermittlungstechnischen Ressourcen VR von Wählverbindungen W mit Verbindungsdauerangabe nicht für die folgende terminierte Festverbindung FV ausreicht. Unter dieser Voraussetzung wird beginnend gemäß FIG 1 A der Reservierungsablauf am ersten Reservierungszeitpunkt trz1 gestartet. Hierbei wird die Summe der vermittlungstechnischen Ressourcen VR der Wählverbindungen W, deren angegebene Verbindungsdauern vor dem Termin T für die terminierte Festverbindung FV enden, ermittelt und die zusätzlichen erforderlichen vermittlungstechnischen Ressourcen VR durch freiwerdende vermittlungstechnische Ressourcen VR von Wählverbindungen W ohne Verbindungsdauerangabe reserviert. In FIG 1C sei dies beispielsweise durch die ersten beiden Stufen dargestellt. Der weitere Verlauf des Reservierungsablaufs ist durch die freiwerdenden vermittlungstechnischen Ressourcen VR der selektierten Wählverbindungen W mit Verbindungsdauerangabe bestimmt. Durch Vergleich der in FIG 1C und FIG 1A senkrecht schraffierten Flächen ist verdeutlicht, daß auch bei einer Kombination der herkömmlichen Reservierungsverfahren mit dem erfindungsgemäßen Verfahren ein noch erheblicher Umfang von vermittlungstechnischen Ressourcen VR kürzere Zeit reserviert wird sowie für Wählverbindungen W verfügbar ist und somit die vermittlungstechnische Leistungsfähigkeit eines Kommunikationssystems wesentlich gesteigert wird.

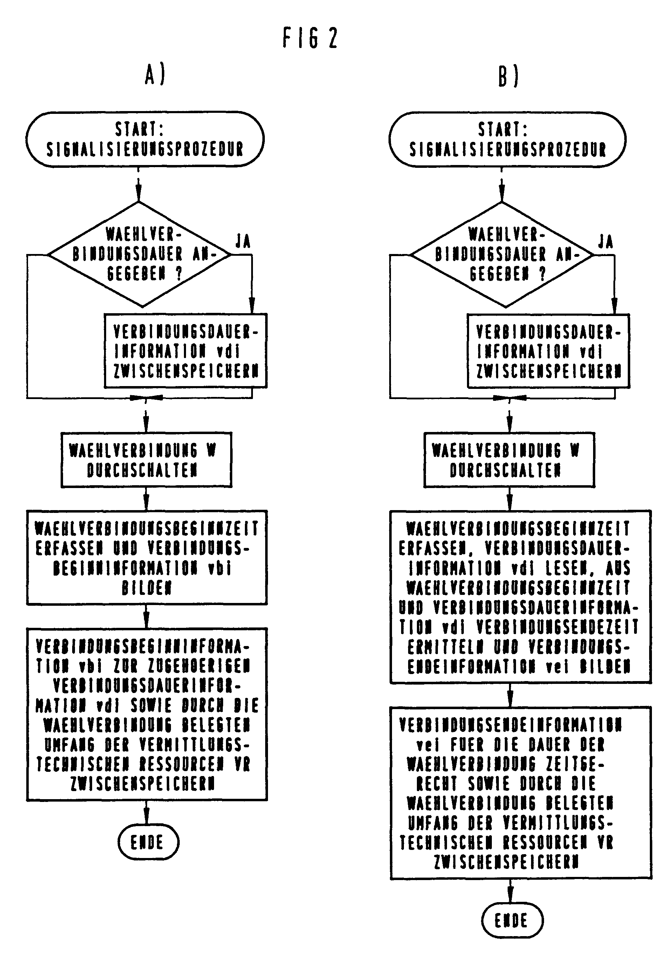

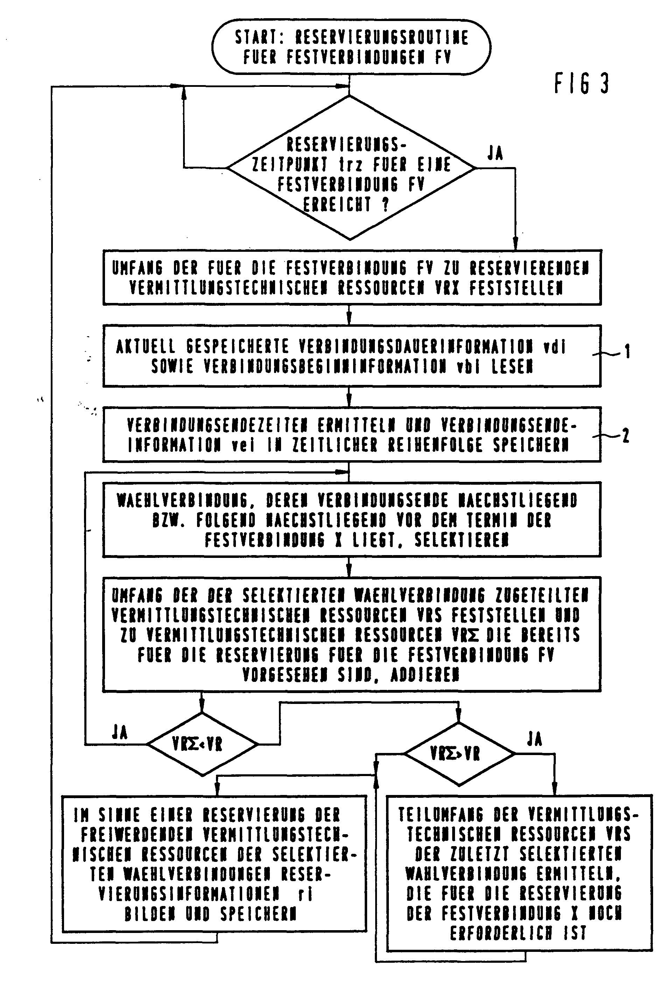

In FIG 2A und 2B sind mit Hilfe von zwei Ablaufdiagrammen zusammen mit dem in FIG 3 dargestellten Ablaufdiagramm zwei vorteilhafte programmtechnische Realisierungen dargestellt. Für die beiden Ausführungsbeispiele sei vorausgesetzt, daß die Verbindungsdauerinformationen vdi im Rahmen einer Signalisierung zwischen dem Kommunikationssystem und den Kommunikationsendeinrichtungen übermittelt werden. Die Signalisierungsprozedur entspricht beispielsweise der CCITT-Empfehlung Q.93B (B-ISDN Access Signalling), wobei beispielsweise das Informationselement um einen Bereich für die Übermittlung einer Verbindungsdauerinformation vdi erweitert ist.

Der wesentliche Unterschied der beiden Realisierungsvarianten besteht darin, daß bei der ersten Variante - FIG 2A-nach dem Durchschalten der jeweiligen Wählverbindung W zusätzlich eine Verbindungsbeginninformation vbi gebildet wird und diese zusammen mit der Verbindungsdauerinformation vdi zwischengespeichert wird und bei Variante 2 - FIG 2B-nach dem Durchschalten der jeweiligen Wählverbindung W sofort nach dem Erfassen der Wählverbindungsbeginnzeit eine Verbindungsendezeit ermittelt und eine Verbindungsendeinformation vei gebildet und zwischengespeichert wird. Eine Realisierung gemäß der Variante 1 ist vorzugsweise für Kommunikationssysteme vorzusehen, bei denen wenige Festverbindungen zu vermitteln sind, da der zusätzliche Aufwand während der Vermittlung einer Wählverbindung auf ein Minimum beschränkt bleibt. Realisierungsvariante 2 eignet sich vorzugsweise für Kommunikationssysteme, bei denen häufig Festverbindungen zu vermitteln sind, da während der Signalisierungsprozedur bereits eine Verbindungsendeinformation vei gebildet und zwischengespeichert und somit der Reservierungsablauf erheblich verkürzt wird.

In FIG 3 ist in einem Ablaufdiagramm die Reservierungsroutine für Festverbindungen FV gemäß der Realisierungsvariante - FIG 2A - dargestellt. Ein zu FIG 2B zugeordnetes Ablaufdiagramm ergibt sich dadurch, daß die durch die Ziffern 1 und 2 bestimmten Ablaufschritte entfallen.

## Patentansprüche

1. Verfahren zur Zuteilung vermittlungstechnischer Ressourcen (VR) in einem Kommunikationssystem, in dem mit Hilfe der vermittlungstechnischen Ressourcen (VR) terminierte Festverbindungen (FV) und Wählverbindungen (W) zwischen an das Kommunikationssystem angeschlossenen Kommunikationsendeinrichtungen vermittelt werden,
**dadurch gekennzeichnet, daß**
- bei Wählverbindungen (W), deren Verbindungsdauern angegeben wurden, in den jeweiligen Kommunikationsendeinrichtungen eine Verbindungsdauerinformation (vdi) gebildet und im Rahmen des Verbindungsaufbaus an das Kommunikationssystem übermittelt werden,
- in dem Kommunikationssystem ab Reservierungszeitpunkten (trz2) für terminierte Festverbindungen (FV) diejenigen Wählverbindungen (W), deren angegebene Verbindungsdauern vermittlungsterminnächstgelegen vor den folgenden Vermittlungsterminen (T) der terminierten Festverbindungen (FV) enden, selektiert werden sowie aus diesen in Abhängigkeit von Umfängen der den selektierten Wählverbindungen (W) zugeordneten vermittlungstechnischen Ressourcen (VR) Wählverbindungen (W) ausgewählt werden, wobei die Reservierungszeitpunkte von Umfängen der für die terminierten Festverbindungen (FV) vorgesehenen vermittlungstechnischen Ressourcen (VR) und der Verkehrsbelastung des Kommunikationssystems abhängig sind, und
- bei dem nach Verbindungsende der ausgewählten Wählverbindungen (W) deren freiwerdende vermittlungstechnische Ressourcen (VR) für die jeweils vorgesehenen terminierten-Festverbindungen (FV) reserviert werden.

2. Verfahren nach Anspruch 1,
**dadurch gekennzeichnet,**
**daß** im Kommuniktionssystem die übermittelten Verbindungsdauerinformationen (vdi) zwischengespeichert werden, daß nach dem Durchschalten der zugehörigen Wählverbindung (W) deren Verbindungsbeginnzeiten ermittelt und mit Hilfe der gespeicherten Verbindungsdauerinformationen (vdi) der Verbindungsendezeitpunkt festgestellt, eine entsprechende Verbindungsendeinformation (vei) gebildet und anstelle der Verbindungsdauerinformation (vdi) gespeichert wird.

3. Verfahren nach einem der Ansprüche 1 oder 2,
**dadurch gekennzeichnet,**
**daß** ab Reservierungszeitpunkten (trz1), die für die Reservierung von freiwerdenden vermittlungstechnischen Ressourcen von Wählverbindungen(W), für die keine Verbindungsdauern angegeben wurden, vorgesehen sind, in Abhängigkeit von der Anzahl von Wählverbindungen (W), deren angegebene Verbindungsdauern vermittlungsterminnächstgelegen vor den folgenden Vermittlungsterminen (T) von terminierten Festverbindungen (FV) enden, freiwerdende vermittlungstechnische Ressourcen (VR) der Wählverbindungen (W) ohne angebbare Verbindungsdauern reserviert werden.

4. Verfahren nach einem der Ansprüche 1 bis 3,
**dadurch gekennzeichnet,**
**daß** der Reservierungszeitpunkt (trz1, trz2) für die Reservierung von vermittlungstechnischen Ressourcen (VR) von Wählverbindungen (W) mit oder ohne angegebene Verbindungsdauern in Abhängigkeit von der Anzahl der Wählverbindungen (W) mit angegebenen Verbindungsdauern und/oder der Summe der vermittlungstechnischen Ressourcen (VR) dieser Wählverbindungen (W) bestimmt wird.

5. Verfahren nach einem der Ansprüche 1 bis 3,
**dadurch gekennzeichnet,**
**daß** im Kommunikationssystem die übermittelten Verbindungsdauerinformationen (vdi) zwischengespeichert werden, daß nach dem Durchschalten der zugehörigen Wählverbindungen (W) deren Verbindungsbeginnzeiten ermittelt und eine Verbindungsbeginninformation (vbi) gebildet sowie zu der zugehörigen Verbindungsdauerinformation (vdi) gespeichert wird.

6. Verfahren nach Anspruch 4, **dadurch gekennzeichnet, daß** ab einem für die jeweilige Festverbindung (FV) vorgesehenen Reservierungszeitpunkt (trz) die Verbindungsdauerinformationen (vdi) sowie die Verbindungsbeginninformationen (vbi) gelesen, der jeweilige Verbindungsendezeitpunkt ermittelt sowie eine entsprechende Verbindungsendeinformation (vei) gebildet und in zeitlicher Reihenfolge gespeichert wird, daß mit Hilfe der gespeicherten Verbindungsendeinformationen (vei) die vor dem Termin (T) der terminierten Festverbindung (VR) nächstliegende Wählverbindung (W) selektiert und der Umfang der zugeteilten vermittlungstechnischen Ressourcen festgestellt wird, daß bei nicht ausreichendem Umfang der vermittlungstechnischen Ressourcen (VR) der selektierten Wählverbindung (W) für die jeweils zu vermittelnde terminierte Festverbindung (FV) solange jeweils die folgende vermittlungsterminnächstliegende Wählverbindung (W) ausgewählt wird, bis die Summe der vermittlungstechnischen Ressourcen(VR) der ausgewählten Wählverbindungen (W) dem erforderlichen Umfang der vermittlungstechnischen Ressourcen (VR) der terminierten Festverbindung (FV) entspricht und daß im Sinne einer Reservierung der freiwerdenden vermittlungstechnischen Ressourcen (VR) der ausgewählten Wählverbindungen (W) Reservierungsinformationen (ri) gebildet und gespeichert werden.

7. Verfahren nach Anspruch 5, **dadurch gekennzeichnet, daß** ab einem für die jeweilige terminierte Festverbindung (FV) vorgesehenen Reservierungszeitpunkt (trz) mit Hilfe der gespeicherten Verbindungsendeinformationen (vei) die vor dem Vermittlungstermin (T) der jeweiligen terminierten Festverbindung (FV) nächstliegende Wählverbindung (W) selektiert und der Umfang der zugehörigen vermittlungstechnischen Ressourcen (VR) festgestellt wird, daß bei nicht ausreichendem Umfang der vermittlungstechnischen Ressourcen (VR) der selektierten Wählverbindung (W) für die jeweils zu vermittelnde terminierte Festverbindung (FV) solange jeweils die folgende vermittlungsterminnächstgelegene Wählverbindung (W) ausgewählt wird, bis die Summe der vermittlungstechnischen Ressourcen der ausgewählten Verbindungen (W) jeweils dem erforderlichen Umfang der vermittlungstechnischen Ressourcen (VR) der terminierten Festverbindung (FV) entspricht und daß im Sinne einer Reservierung der freiwerdenden vermittlungstechnischen Ressourcen (VR) der ausgewählten Wählverbindungen (W) Reservierungsinformationen (ri) gebildet und gespeichert werden.

8. Verfahren nach einem der vorhergehenden Ansprüche, **dadurch gekennzeichnet, daß** die vermittlungstechnischen Ressourcen (VR) die Vermittlungskapazität einer Kommunikationsanlage und/oder jeweils die Übermittlungskapazität eines Basisanschlusses eines breitbandigen, diensteintegrierenden Digitalnetzes repräsentieren.

9. Verfahren nach Anspruch 7, **dadurch gekennzeichnet, daß** die Verbindungsdauerinformationen (vdi) in einem hierfür vorgesehenen Dauerinformationsfeld einer Verbindungsaufbaumeldung eines breitbandigen, diensteintegrierenden Digitalnetzes von einer Kommunikationsendeinrichtung an das Kommunikationssystem übermittelt wird.

## Claims

1. Method for allocating switching resources (VR) in a communication system in which fixed connections (FV) and dial-up connections (W) are terminated with the aid of the switching resources (VR), are switched between communication terminals connected to the communication system, **characterized in that**
- in the case of dial-up connections (W), the call durations of which have been specified, a call duration information item (vdi) is formed in the respective communication terminals and transmitted to the communication system during the connection set-up,
- in the communication system, starting from reservation times (trz2) for terminated fixed connections (FV), the dial-up connections (W), the specified call durations of which end, situated next to the switching time, before the subsequent switching times (T) of the terminated fixed connections (FV), are selected and from these, dial-up connections (W) are selected in dependence on amounts of switching resources (VR) allocated to the selected dial-up connections (W), the reservation times being dependent on amounts of the switching resources (VR) provided for the terminated fixed connections (FV) and the traffic loading on the communication system, and
- in which, after the end of the call of the selected dial-up connections (W), their switching resources (VR), which are being released, are reserved for the terminated fixed connections (FV) in each case provided.

2. Method according to Claim 1, **characterized in that**, in the communication system, the transmitted call duration information (vdi) is temporarily stored, in that after the associated dial-up connection (W) has been switched through, its beginning-of-call times are determined and the end-of-call time is determined with the aid of the stored call duration information (vdi), a corresponding end-of-call information item (vdi) is formed and is stored instead of the call duration information item (vdi).

3. Method according to one of Claims 1 or 2, **characterized in that**, starting with reservation times (trz1) which are provided for reserving switching resources, which are being released, of dial-up connections (W) for which no call durations have been specified, in dependence on the number of dial-up connections (W), the specified call durations of which end, situated next to the switching time, before the subsequent switching times (T) of terminated fixed connections (FV), switching resources (VR), which are being released, of the dial-up connections (W) are reserved without specifiable call durations.

4. Method according to one of Claims 1 to 3, **characterized in that** the reservation time (trzl, trz2) for reserving switching resources (VR) of dial-up connections (W) with or without specified call durations is determined in dependence on the number of dial-up connections (W) with specified call durations and/or the sum of switching resources (VR) of these dial-up connections (W).

5. Method according to one of Claims 1 to 3, **characterized in that**, in the communication system, the transmitted call duration information (vdi) is temporarily stored, in that after the associated dial-up connections (W) have been switched through, their beginning-of-call times are determined and a beginning-of-call information item (vdi) is formed and stored with the associated call duration information (vdi).

6. Method according to Claim 4, **characterized in that**, starting with a reservation time (trz) provided for the respective fixed connection (FV), the call duration information (vdi) and the beginning-of-call information (vdi) is read, the respective end-of-call time is determined and a corresponding end-of-call information item (vei) is formed and stored in order in time, in that, using the stored end-of-call information (vei), the dial-up connection (W) which is nearest before the time (T) of the terminated fixed connection (VR), is selected and the scope of the allocated switching resources is established, in that, if the scope of the switching resources (VR) of the selected dial-up connection (W) is insufficient for the terminated fixed connection (FV) to be switched in each case, the following dial-up connection (W) nearest to the switching time is in each case selected until the sum of the switching resources (VR) of the selected dial-up connections (W) corresponds to the required scope of the switching resources (VR) of the terminated fixed connection (FV) and in that reservation information (ri) is formed and stored in the sense of reserving the switching resources (VR), which are being released, of the selected dial-up connections (W).

7. Method according to Claim 5, **characterized in that**, starting with a reservation time (trz) provided for the respective terminated fixed connection (FV), the dial-up connection (W) nearest before the switching time (T) of the respective terminated fixed connection (FV) is selected with the aid of the stored end-of-call information (vei) and the scope of the associated switching resources (VR) is established, in that, if the scope of the switching resources (VR) of the selected dial-up connection (W) is insufficient for the terminated fixed connection (FV) to be switched in each case, the following dial-up connection (W) nearest to the switching time is in each case selected until the sum of the switching resources of the selected connections (W) in each case corresponds to the required scope of the switching resources (VR) of the terminated fixed connection (FV) and in that reservation information (ri) is formed and stored in the sense of reserving the switching resources (VR), which are being released, of the selected dial-up connections (W).

8. Method according to one of the preceding claims, **characterized in that** the switching resources (VR) represent the switching capacity of a communication system and/or in each case the transmission capacity of a basic access of a broadband integrated-services digital network.

9. Method according to Claim 7, **characterized in that** the call duration information (vdi) is transmitted in a duration information field, provided for this purpose, of a call set-up message of a broadband integrated-services digital network from a communication terminal to the communication system.

## Revendications

1. Procédé destiné à allouer des ressources de commutation (VR) dans un système de communication au cours duquel, à l'aide des ressources de commutation (VR), on établit des connexions permanentes (FV) et des connexions établies par sélection (W), prévues à des dates définies, entre les dispositifs terminaux de communication raccordés au système de communication,
**caractérisé par le fait que**
- pour les connexions établies par sélection (W), dont la durée de connexion a été indiquée, une information (vdi), concernant la durée de la connexion, est formée dans les dispositifs terminaux de communication respectifs et transmise au système de communication dans le cadre de l'établissement de la connexion,
- dans le système de communication, à partir des instants de réservation (trz2) pour les connexions permanentes (FV), prévues à des dates définies, on retient les connexions établies par sélection (W), dont la durée indiquée se termine, le plus près possible des dates d'établissement, avant les dates suivantes d'établissement (T) des connexions permanentes (FV), prévues à des dates définies, et, parmi celles-ci, on choisit des connexions établies par sélection (W) en fonction du volume des ressources de commutation (VR) affectées aux connexions établies par sélection retenues, les instants de réservation dépendant des volumes de ressources de commutation (VR) pressenties pour les connexions permanentes (FV) prévues à des dates définies, et de la charge de trafic du système de communication,
- à la fin des connexions établies par sélection (W) retenues, leurs ressources de commutation (VR) libérées sont réservées pour les connexions permanentes (FV) respectives, prévues à des dates définies.

2. Procédé selon la revendication 1
**caractérisé par le fait que,**
dans le système de communication, les informations (vdi) concernant la durée des connexions, qui ont été transmises, sont mémorisées temporairement, que, après l'établissement de la connexion établie par sélection (W) correspondante, l'instant de début de la connexion est déterminé et, à l'aide des informations (vdi) concernant la durée des connexions, l'instant de fin de la connexion est constaté, une information correspondante (vei) concernant la fin de la connexion est composée et mémorisée à la place de l'information (vdi) concernant la durée de la connexion.

3. Procédé selon l'une des revendications 1 ou 2
**caractérisé par le fait**
que, à partir des instants de réservation (trz1), qui sont prévus pour la réservation de ressources de commutation libérées par des connexions établies par sélection (W), pour lesquels aucune durée de connexion n'a été indiquée, en fonction du nombre de connexions établies par sélection (W), dont les durées de connexion indiquées se terminent à un instant le plus proche des dates d'établissement, avant les dates suivantes d'établissement (T) des connexions permanentes (FV), prévues à des dates définies, des ressources de commutation (VR), libérées par les connexions établies par sélection (W) sans durée de connexion qui peut être indiquée, sont réservées.

4. Procédé selon l'une des revendications 1 à 3
**caractérisé par le fait**
que l'instant de réservation (trz1, trz2) pour la réservation de ressources de commutation (VR) de connexions établies par sélection (W), avec ou sans indication de la durée de connexion, est déterminé en fonction du nombre de connexions établies par sélection (W), avec indication de la durée de connexion, et/ou de la somme des ressources de commutation (VR) de ces connexions établies par sélection (W).

5. Procédé selon l'une des revendications 1 à 3
**caractérisé par le fait**
que, dans le système de communication, les informations (vdi) transmises, concernant la durée de la connexion, sont mémorisées temporairement, que, après l'établissement des connexions établies par sélection (W) correspondantes, leur instant de début de connexion est déterminé et une information (vbi), concernant le début de la connexion, est formée et mémorisée en commun avec l'information (vdi), concernant la durée de la connexion.

6. Procédé selon la revendication 4
**caractérisé par le fait**
que, à partir d'un instant de réservation (trz) prévu pour la connexion permanente (FV) respective, l'information (vdi), concernant la durée de la connexion, ainsi que l'information (vbi), concernant le début de la connexion, sont lues, l'instant respectif de fin de la connexion est déterminé et une information (vei) correspondante, concernant la fin de la connexion, est formée et mémorisée dans un ordre chronologique, que, à l'aide des informations (vei) mémorisées, concernant la fin de la connexion, la connexion établie par sélection (W), précédant la date d'établissement de la connexion permanente (FV), prévue à une date définie, et la plus proche de cette date est retenue et le volume des ressources de commutation affectées est constaté, que, si le volume des ressources de commutation (VR) des connexions établies par sélection (W) retenues ne suffit pas pour la connexion permanente (FV) respective à établir, prévue à une date définie, on choisit respectivement la connexion établie par sélection (W) suivante, la plus proche de la date d'établissement jusqu'à ce que la somme des ressources de commutation (VR) des connexions établies par sélection (W) choisies corresponde au volume nécessaire des ressources de commutation (VR) de la connexion permanente (FV), prévue à une date définie, et que, dans le sens d'une réservation des ressources de commutation (VR), qui deviennent libres, des connexions établies par sélection (W) choisies, des informations (ri) de réservation sont formées et mémorisées.

7. Procédé selon la revendication 5
**caractérisé par le fait**
que, à partir d'un instant de réservation (trz) prévu pour la connexion permanente (FV) respective, à l'aide des informations (vei) mémorisées, concernant la fin de la connexion, la connexion établie par sélection (W), précédant la date d'établissement (T) de la connexion permanente (FV) respective, prévue à une date définie, et la plus proche de cette date, est retenue et le volume des ressources de commutation (VR) correspondantes est constaté, que, si le volume des ressources de commutation (VR) des connexions établies par sélection (W) retenues ne suffit pas pour la connexion permanente (FV) respective à établir et prévue à une date définie, on choisit respectivement la connexion établie par sélection (W) suivante, la plus proche de la date d'établissement, jusqu'à ce que la somme des ressources de commutation des connexions (W) choisies corresponde respectivement au volume nécessaire des ressources de commutation (VR) de la connexion permanente (FV), prévue à une date définie, et que, dans le sens d'une réservation des ressources de commutation (VR), qui deviennent libres, des connexions établies par sélection (W) choisies, des informations (ri) de réservation sont formées et mémorisées.

8. Procédé selon l'une des revendications précédentes
**caractérisé par le fait**
que les ressources de commutation (VR) représentent la capacité de commutation d'une installation de communication et/ou la capacité de transfert d'un accès de base d'un réseau numérique à large bande et à intégration de services.

9. Procédé selon la revendication 7
**caractérisé par le fait**
que les informations (vdi), concernant la durée de la connexion, sont transmises, à partir d'un dispositif terminal de communication au système de communication, dans un champ permanent d'information, prévu à cet effet, d'un message d'établissement de connexions d'un réseau numérique à large bande et à intégration de services.
